# EUROPEAN PATENT APPLICATION

(11) **EP 4 804 115 A2**
(43) Date of publication of application: **09.09.2026**
(21) Application number: 26194503.4
(22) Date of filing: 28.06.2024
(51) Int. Cl.: G06T 1/60

(54) **SYSTEMS AND METHODS FOR OPTIMIZED CACHING TECHNIQUES IN IMAGE PROCESSING**

(62) Document number(s) of the earlier application(s) in accordance with Art. 76 EPC: 24748475.1 / 4 695 692
(71) Applicant: Google LLC, Mountain View, CA 94043 (US)
(72) Inventor: The designation of the inventor has not yet been filed
(74) Representative: Marks & Clerk GST

(57) **Abstract**

Methods, systems, and apparatus for cache data replacement in image processing. One of the methods includes maintaining in a cache image frame data blocks of an input image frame, the data blocks including pixel data corresponding to tiles forming an output image frame. The cache includes a plurality of lines each having a plurality of flags representing current and previous neighbor of a pixel in the pixel data on each of at least two levels based on portions of the output image frame. A flag is set that represents the current neighbor for cache lines that store data blocks that have one or more pixels that are neighbors of the pixel at each level. Which cache line to evict is determined based on the flags, where flags for lower levels and current neighbors have priority over flags of higher levels and previous neighbors.

## Description

### BACKGROUND

This specification relates to caching techniques in image processing memory operations, and more particularly to cache store and cache replacement techniques in image processing applications.

In some processor systems, inclusion of a cache between a processor and memory can improve performance. For example, cache can improve performance by storing frequency accessed data closer to the processor, allowing for quicker retrieval compared to accessing the data from memory or storage devices. The cache can employ pre-fetching policies, which can predict data that the processor may need next and pre-load the data into the cache. The cache can also employ replacement policies, which can identify the data to be removed from the cache when the cache is full. The replacement policies identify the data to be removed with the aim to reduce the impact of the removed data on system performance.

### SUMMARY

This specification describes techniques for storing and replacing data in caches involved in image processing applications based on access patterns within an image frame. In particular, the specification describes techniques for storing image frame data requested by an image processing unit into various sets of a cache. The image frame data blocks are distributed into the sets of the cache based on a directionality input indicating an irregular access pattern in reading an input image frame. An adaptive set index is determined using an adaptive set index function that generates a set index based on the directionality input. The image frame data blocks are stored in the sets of the cache based on the adaptive set index.

The specification also describes techniques for replacing image frame data blocks from the cache. In particular, the specification describes techniques for including a plurality of flags for each cache line in the cache, where each flag represents a current neighbor or a previous neighbor of a pixel in the pixel data that is currently being processed by the image processing unit. At least two levels are defined for each of the plurality of flags, each level corresponding to a different respective size of portions of the output image frame and representing a position of a pixel in the pixel data in relation to other pixels in the pixel data, where lower levels correspond to smaller portions of the output image and higher levels correspond to larger portions of the output image frame. The flags for cache lines are set based on the cache lines including pixel data of pixels that are neighbors of the pixel at each level of the at least two levels. Eviction of data blocks from the cache lines is determined based on priority of the flags, where flags of lower levels and current neighbors have priority over flags for higher levels and previous neighbors.

The specification further describes various scan line patterns for scanning pixel data to generate the output image frame. For example, the image processing unit can scan a portion of the input image frame in a vertical scan line pattern. In another example, the image processing unit can horizontally scan the entire portion of the input image frame that is being processed to generate the output image frame.

Particular embodiments of the subject matter described in this specification can be implemented so as to realize one or more of the following advantages. Performance and size requirements of a cache can be improved when storing image frame data blocks. For example, by using an adaptive set index, where the adaptive set index is determined based on a directionality input of an irregular access pattern of the input image frame, the image frame data blocks can be evenly distributed into a plurality of sets of the cache. In some traditional approaches, the image frame data blocks were unevenly distributed across the plurality of sets of the cache. The even distribution reduces the risk of the image frame data blocks being stored in only a subset of sets of the cache, thereby reducing the need for larger sized sets of the cache. As a result, smaller sized caches can be utilized, which positively impact power consumption and cost of the cache.

Cache replacement policies based on characteristics of image processing operations can improve cache performance. For example, flags can be defined for cache lines, where the flags are related to current and previous neighbors over various levels of proximity to a pixel being processed. The flags can help identify cache lines that store data blocks that are likely to be reused based on potential access patterns in image processing applications. The cache replacement policy evicts image frame data blocks from cache lines based on the flags, where flags of lower levels and current neighbors have priority over flags of higher levels and previous neighbors. The cache replacement policies discussed herein can perform better than traditional cache replacement policies such as, for example, least recently used (LRU).

The image processing unit can scan pixels within an input image frame to generate an output image frame based on various scanning patterns to reduce the size of the cache needed to store the image frame data blocks. For example, the image processing unit can use a vertical scanning pattern within portions of the image frame or use horizontal scan patterns that span the entire image frame to reduce the size of the cache needed to store the image frame data blocks.

In instances where the size of the image frame data blocks loaded from main memory is larger than the size of the cache lines, an additional flag can be utilized evict image frame data blocks at a finer granularity to further reduce the cache size.

At least one aspect of the description includes a method including maintaining, in a cache, image frame data blocks of an input image frame, the image frame data blocks including pixel data corresponding to a plurality of tiles forming an output image frame, wherein the cache includes, for each cache line, a plurality of flags, wherein each flag represents a current neighbor or previous neighbor of a pixel in the pixel data on each of at least two levels, each level corresponding to a different respective size of portions of the output image frame and representing a position of a pixel in the pixel data in relation to other pixels in the pixel data, wherein lower levels correspond to smaller portions of the output image frame and higher levels correspond to larger portions of the output image frame; for each pixel in the pixel data, setting a flag that represents the current neighbor for cache lines that store input image data blocks that have one or more pixels that are neighbors of the pixel at each level of the at least two levels; receiving a request to store additional image frame data blocks in the cache; and responsive to the request, determining which cache line to evict image data blocks from based on the plurality of flags, wherein flags for lower levels and current neighbors have priority over flags for higher levels and previous neighbors.

In some aspects, the method includes for each pixel at an end of processing of each level of the at least two levels: for cache lines that store image frame data blocks that have pixels that are neighbors of the pixel at that level, latching the flag that represents the current neighbor to the flag that represents the previous neighbor and clearing the flag that represents the current neighbor; for cache lines that store image frame data blocks that have pixels that are neighbors of the pixel at a lower level, clearing the flag that represents the current neighbor; and evicting data from that cache line that has a lowest priority, wherein a lower level flag has a higher priority to a higher level flag and the flag that represents the previous neighbor has a lower priority to the flag that represents the current neighbor.

In some aspects, the at least two levels includes three levels: a level zero related to intra-tile scan-line neighbor pixels, a level one related to intra-tile-row neighbor pixels, and a level two related to inter-tile row neighbor pixels.

In some aspects, the method includes for each pixel: determining that the read data is a hit in the cache, and responsive to the determination, clearing the flags that represents the previous neighbor associated with a same level as that of the pixel for the cache line where the pixel data is stored.

In some aspects, a sequence of processing pixels in the image frame includes horizontally scanning lines of pixels within each tile, followed by horizontally processing each tile in a tile-row.

In some aspects, a sequence of processing pixels in the image frame includes vertically scanning lines of pixels within each tile-row, followed by vertically processing each tile-row in the image frame, and wherein the at least two levels includes two levels: a level-zero related to intra-tile scan-line neighbor pixels, and a level-two related to inter-tile row neighbor pixels.

In some aspects, a sequence of processing pixels in the image frame includes horizontally scanning lines of pixels within each image frame from one end of the image frame to an opposite end of the image frame, wherein the at least two levels is reduced to a single level: a level-two related to inter-tile row neighbor pixels.

In some aspects, the image frame data blocks occupy a plurality of cache lines of the cache, the method including: allocating a plurality of cache lines of the cache to the image frame data blocks; setting a used flag for cache lines of the plurality of cache lines for which image frame data blocks are used for processing or for which there is a hit for an image frame data block; maintaining the used flag at a reset value for cache lines of the plurality of cache lines for which the image frame data blocks have not been used for processing; and evicting data from the cache line that has the lowest priority and has a set used flag.

In some aspects, the used flag for the cache line is assigned a lowest priority in relation to the plurality of flags associated with the cache line.

In some aspects, a processing system, includes: a cache having stored therein image frame data blocks of an input image frame, the image frame data blocks including pixel data corresponding to a plurality of tiles forming an output image frame, wherein the cache includes, for each cache line, a plurality of flags, wherein each flag represents a current neighbor or previous neighbor of a pixel in the pixel data on each of at least two levels, each level corresponding to a different respective size of portions of the output image frame representing a position of the pixel in the pixel data in relation to the other pixels in the pixel data, wherein lower levels correspond to smaller portions of the output image frame and higher levels correspond to larger portions of the output image frame; and a cache replacement logic configured to: set, for each pixel, a flag that represents the current neighbor for cache lines that store input image frame data blocks that have one or more pixels that are neighbors of the pixel at each level of the at least two levels, receive a request to store additional image frame data blocks in the cache, and responsive to the request, determine which cache line to evict image frame data blocks from based on the plurality of flags, wherein flags for lower levels and current neighbors have priority over flags for higher levels and previous neighbors.

In some aspects, the cache replacement logic is configured to: for each pixel at an end of processing of each level of the at least two levels: for cache lines that store image frame data blocks that have pixels that are neighbors of the pixels at that level, latch the flag that represents the current neighbor to the flag that represents the previous neighbor and clear the flag that represents the current neighbor, for cache lines that store image frame data blocks that have pixels that are neighbors of the pixels at a lower level, clear the flag that represents the current neighbor, and evict data from that cache line that has a lowest priority, wherein a lower level flag has a higher priority to a higher level flag and the flag that represents the previous neighbor has a lower priority to the flag that represents the current neighbor.

In some aspects, the at least two levels includes three levels: a level zero related to intra-tile scan-line neighbor pixels, a level one related to intra-tile-row neighbor pixels, and a level two related to inter-tile row neighbor pixels.

In some aspects, the cache replacement logic is configured to: for each pixel: determine that the read data is a hit in the cache, and responsive to the determination, clear the flags that represent the previous neighbor associated with a same level as that of the pixel for the cache line where the pixel data is stored.

In some aspects, a sequence of processing pixels in the image frame includes horizontally scanning lines of pixels within each tile, followed by horizontally processing each tile in a tile-row.

In some aspects, a sequence of processing pixels in the image frame includes vertically scanning lines of pixels within each tile-row, followed by vertically processing each tile-row in the image frame, and wherein the at least two levels includes two levels: a level-zero related to intra-tile scan-line neighbor pixels, and a level-two related to inter-tile row neighbor pixels.

In some aspects, a sequence of processing pixels in the image frame includes horizontally scanning lines of pixels within each image frame from one end of the image frame to an opposite end of the image frame, wherein the at least two levels is reduced to a single level: a level-two related to inter-tile row neighbor pixels.

In some aspects, the image frame data blocks occupy a plurality of cache lines of the cache, the cache replacement logic configured to: allocate a plurality of cache lines of the cache to the image frame data blocks, set a used flag for cache lines of the plurality of cache lines for which the image frame data blocks are used for processing or for which there is a hit for an image frame data block, maintain the used flag at a reset value for cache lines of the plurality of cache lines for which the image frame data blocks have not been used for processing, and evict data from the cache line that has the lowest priority and has a set used flag.

In some aspects, the used flag for the cache line is assigned a lowest priority in relation to the plurality of flags associated with the cache line.

Other implementations of this and other aspects include corresponding systems, apparatus, and computer programs, configured to perform the actions of the methods, encoded on computer storage devices. A system of one or more computers can be so configured by virtue of software, firmware, hardware, or a combination of them installed on the system that in operation causes the system to perform the actions. One or more computer programs can be so configured by virtue of having instructions that, when executed by a data processing apparatus, cause the apparatus to perform the actions.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of a processing system.
FIG. 2 shows an example arrangement of the image frame data blocks as stored in memory.
FIG. 3 shows examples of populating the sets of the cache.
FIG. 4 shows a flow diagram of an example process.
FIG. 5 shows an example bock diagram of the adaptive set index computation at the adaptive set index logic.
FIG. 6 shows an example least recently used cache replacement policy on an image processing application.
FIG. 7 depicts various levels associated with a plurality of flags in the cache.
FIG. 8 shows the cache including a plurality of flags.
FIG. 9 shows a flow diagram of an example cache replacement process.
FIG. 10A shows the image frame data blocks associated with a pixel at level-0.
FIG. 10B shows the image frame data blocks associated with a pixel at level-1.
FIG. 10C shows the image frame data blocks associated with a pixel at level-2.
FIG. 11 shows a vertical scan line pattern per tile row.
FIG. 12 shows a horizontal scan line pattern over an entire image frame.
FIG. 13 shows a block diagram of image frame data blocks allocated to multiple cache lines.

Like reference numbers and designations in the various drawings indicate like elements.

### DETAILED DESCRIPTION

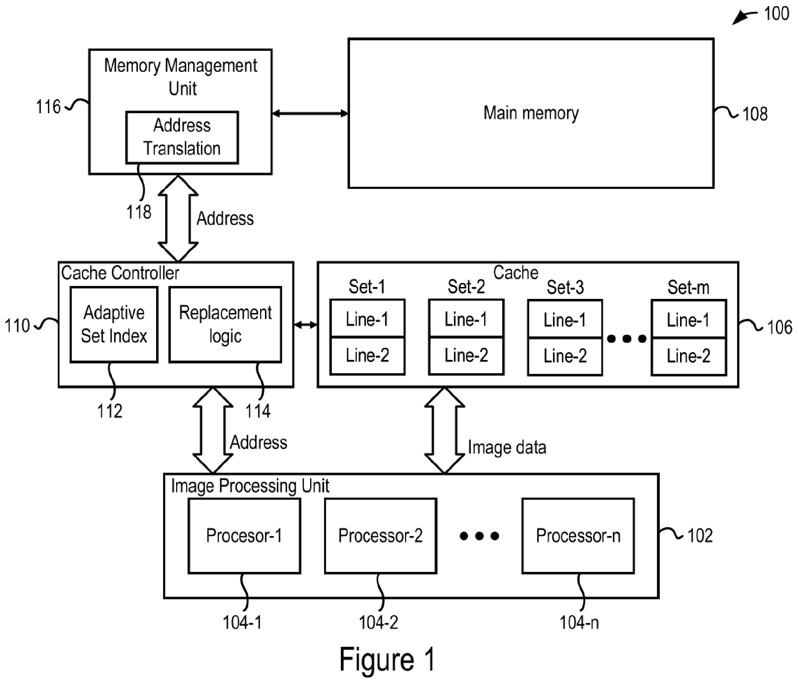

FIG. 1 is a block diagram of a processing system 100. The processing system 100 includes an image processing unit 102, which, in turn, includes a processor-1 104-1, a processor-2 104-2 ... and a processor-n 104-n (collectively referred to as a plurality of processors 104). In some examples, the plurality of processors 104 can represent processing cores of the image processing unit, where the processing cores can share image processing tasks to be performed by the image processing unit 102. In some examples, the one or more processors of the plurality of processors 104 can include processing cores of a multi-core programmable central processing unit. In some examples, one or more processors of the plurality of processors 104 can include programmable graphics processing units. As discussed further below, the processing system 100 can include adaptive set index logic 112 and replacement logic 114. The adaptive set index logic 112 can allow even distribution of data blocks across the sets of a cache 106 by adapting the set index to the directionality of the irregular access patterns of an input image frame. The replacement logic 114 can improve cache performance by introducing flags can help identify cache lines that store data blocks that are likely to be reused based on potential access patterns in image processing applications.

The image processing unit 102 is coupled with a cache 106 and a main memory 108. The cache 106 and the main memory 108 can be components of a hierarchical memory system, which can include additional memory components such as additional caches and non-volatile memory. For example, the cache 106 can be a level one, a level two, a level three, or other level cache that is positioned between the image processing unit 102 and the main memory 108. The cache 106 being positioned "between" the image processing unit 102 and the main memory 108 can mean that the data accessed from main memory 108 can be stored in the cache 106, and when the image processing unit 102 requests data, the presence of the data is checked in the cache 106 first, and if the data is not found in the cache 106 the data is requested from the main memory 108. Indeed, if the hierarchical memory system includes levels of caches in addition to the cache 106, then a cache with a level lower than the level of the cache 106 can be positioned between the cache 106 and the image processing unit 102 while a cache with a level higher than the level of the cache 106 can be positioned between the cache 106 and the main memory 108. In such instances, presence of data is checked in caches from the lowest-level cache to the highest-level cache before being requested from the main memory 108. Regardless of the number of levels of caches employed, one or more of the caches can be similar in design and operation to the cache 106.

All or a subset of the plurality of processors 104 can share the cache 106. For example, data requests from each processor of the plurality of processors 104 can be checked for presence in the cache 106, and if not found in the cache 106 can be requested from the main memory 108. In some other examples, a plurality of caches similar to the cache 106 can be utilized, where one or more of the plurality of processors 104 can share one or more of the plurality of caches.

The cache 106 can be a set-associative cache, where each data block in main memory 108 can be mapped to a specific set in the cache 106, and within each set, the data block can occupy any of the one or more cache lines. In some examples, the number of lines in each set is referred to as "ways" such that, for example, a 4-way set associative cache can include four cache lines in each set. In the example shown in FIG. 1, the cache 106 includes m sets and each set includes two lines. Of course, the cache 106 can be configured to have a different number of sets and different number of lines per set.

A cache controller 110 can be coupled with the cache 106 for controlling the operation of the cache 106. In particular, the cache controller 110 can include adaptive set index logic 112 and replacement logic 114, both of which are discussed in detail below, that determine how data is stored and replaced in the cache 106. Specifically, the adaptive set index logic 112 can determine the distribution of the data blocks into the sets within the cache 106 and the replacement logic 114 can determine which of the already stored data blocks to replace when new data blocks need to be stored in the cache 106. The cache controller 110 can receive an image data request from the image processing unit 102 and can determine whether the requested image data is already present in the cache 106. If the image data is present, then the cache controller 110 can determine a cache hit and can cause the cache 106 to provide the image data on the data bus. If the image data is not found in the cache 106, the cache controller 110 can determine a cache miss, and pass on the address of the requested image data to a memory management unit 116, which can include an address translation block 118 that can translate the address received from the cache controller 110 into a physical address and fetch the requested image data (if available) from the main memory 108.

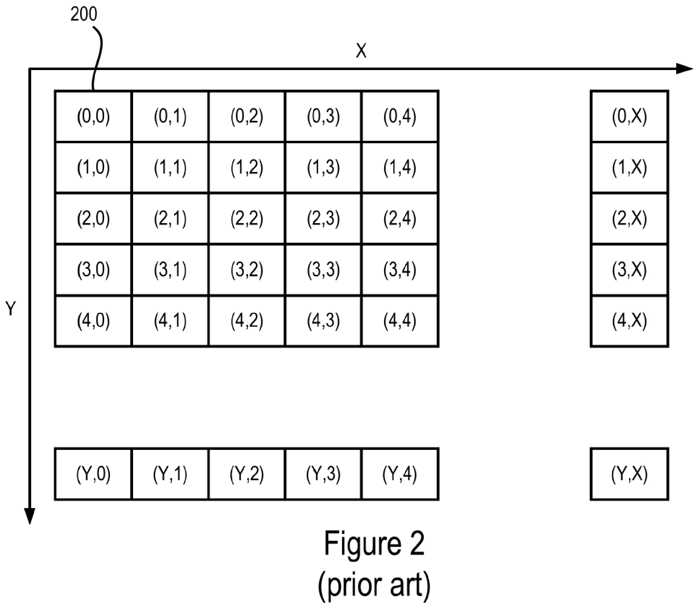

FIG. 2 shows an example arrangement of the image frame data blocks 200 stored in memory, e.g., main memory 108. The image frame data blocks 200 can represent portions of an image frame corresponding to an image file or a media file. Each image frame data block 200 includes data corresponding to a set of pixels. For example, supposing an image frame is 100 x 100 pixels, each image frame data block 200 can include data corresponding to 10 x 10 pixels. In this example, 100 image frame data blocks 200 can be used to store the entire image frame. In some examples, the image frame data block 200 can represent the smallest addressable memory block in the main memory 108. The image frame data blocks 200 can viewed as being positioned in terms of a coordinate system such as, for example, an x- and y-coordinate system. Each image frame data block 200 can have a positional address in terms of the x- and y-coordinates. An x, y position of each image frame data block 200 is indicated in braces. For example, the image frame data block at the top left corner can have an address (0,0), the image frame data block at the bottom left corner can have an address (Y,0), and the image frame data block at the bottom right can have an address (Y,X), where X and Y are numbers indicating the position of the image frame data block 200 on the x-axis and the y-axis.

The image processing unit 102 can address portions of the image frame stored in memory in terms of the x- and y-coordinates of the image frame data blocks 200. For example, the image processing unit 102 can request image frame data block 200 at the top left of the image frame by sending an address (0,0) to the main memory 108. The address translation block 118 can translate this address into a physical memory location in the main memory 108 and retrieve the addressed block.

In some examples, the image frame data block 200 requested by the image processing unit 102 can be stored in the cache 106. The image frame data block 200 can be stored in one of the sets of the set associative cache 106. In one approach, the set in which the image frame data block 200 is stored can be determined based on the address of the image frame data block 200. As mentioned above, in some examples, the image frame data block 200 can be addressed in terms of the x- and y-coordinates of the image frame data block 200 within the image frame. The image frame data block 200 can be stored in a particular set of the cache 106 based on one of its dimension, e.g., x-dimension. For example, the cache controller 110 can perform a X modulo S operation, where X is the x-coordinate and S is the total number of sets in the cache 106.

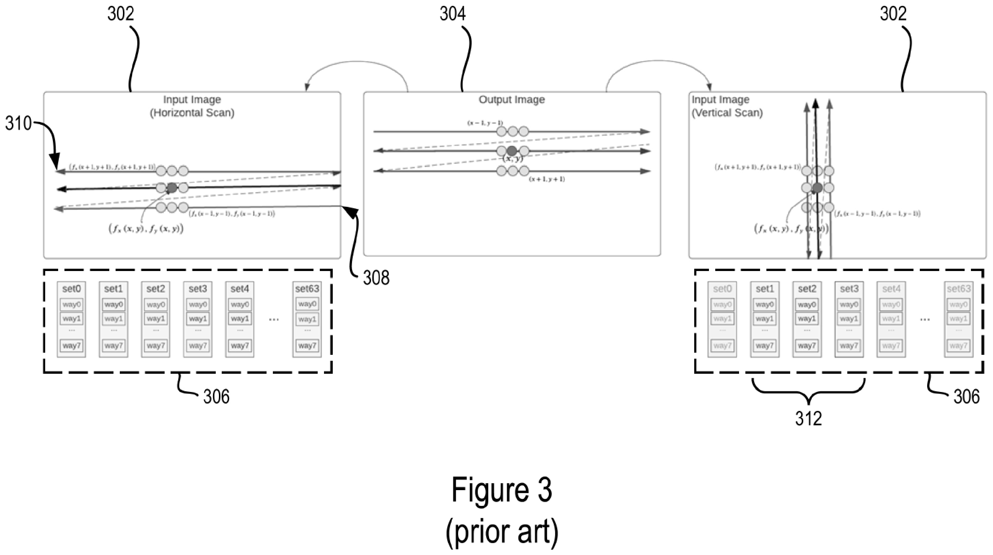

FIG. 3 shows examples of populating the sets of the cache 106. In particular, FIG. 3 shows two examples: one in which an input image frame 302 is scanned horizontally to generate the output image frame 304 and another in which the input image frame is scanned vertically to generate the output image frame 304. FIG. 3 also shows an example cache 306 having 64 sets and 8 lines (indicated by "way0", "way1", ... , "way7"). For the horizontal scan, the image processing unit 102 can request from memory the image frame data blocks (not shown) that include pixels scanned by the scan path. For example, in FIG. 3, the horizontal scan begins at the right of the input image frame 302 at a first position 308 and ends at the left of the input image frame 302 at a second position 310 scanning three lines. The horizontal scan of the input image frame 302 is processed by the image processing unit 102 to generate the corresponding scan lines in the output image frame 304.

Image frame data blocks of the input image frame 302 that have pixels scanned by the scan path can be stored in the cache 306. A cache controller, similar to the cache controller 110 shown in FIG. 1, can determine which set in the cache 306 to store each image frame data block. In one approach, the cache controller can determine the x-axis location of the image frame data block and calculate the X modulo S operation, with the result indicating the set (out of the 64 sets) in which to store the image data block.

With respect to the horizontal scan of the input image frame 302, the image frame data blocks are substantially equally distributed across the sets of the cache 306. This is because the horizontal scan causes storing of image frame data blocks along the x-dimension resulting in a wide range of X module S values. With respect to the vertical scan of the input image frame 302, the image frame data blocks are stored in a subset 312 of the available sets of the cache 306, rather than being distributed across all available sets of the cache 306. This is because the X modulo S values of the image frame data blocks have a relatively narrower range of values, thereby the distribution of the image frame data blocks in the cache is limited to a subset 312 of available sets. As a result, the subset 312 of the available sets of the cache 306 may become occupied with image frame data blocks relatively quickly while other sets in the cache 306 remain unoccupied. As a result, when the subset 312 of the available sets of the cache 306 are full, some of the image frame data blocks would have to be replaced. This can negatively impact the cache hit rate and can result in an increase in memory latency and degraded performance. One approach to mitigating the negative impact on cache hit rate can include increasing the sizes of the sets of the cache 306. However, increasing the size of the sets will increases the overall size of the cache, which, in turn, can increase the power consumed by the cache as well as the cost of the cache.

While FIG. 3 illustrates horizontal and vertical scan scenarios, other image processing scenarios can also result in an underutilized cache. For example, image frame processing tasks that involve image warping, motion compensation, image rotation, lens correction, etc., can result in underutilization of the cache sets. One or more of these example image processing tasks can involve irregular access patterns of the input image frame to generate the output image frame. In this specification, an irregular access pattern is a linear or non-linear access pattern that does not follow a horizontal raster scan pattern within the input image frame. Image rotation, for example, in which the input image frame is rotated by a certain angle to generate the output image frame, can have an irregular access pattern that has directionality. Here directionality can indicate an angular relationship between one of the dimensions (x-axis or y-axis, for example) of the input image frame and a direction of the access pattern of the input image frame. Lens correction, for example, can also exhibit an irregular access pattern. However, in some instances, lens correction may not have any directionality at all in the sense that the access pattern may have several directions. In such instances, even though the access pattern is irregular, the access pattern may have absence of directionality. In some approaches, as discussed below, the processing system 100 can take into consideration the irregular access pattern of the input image frame to generate the output image frame in determining how the image frame data blocks are distributed across the sets of the cache.

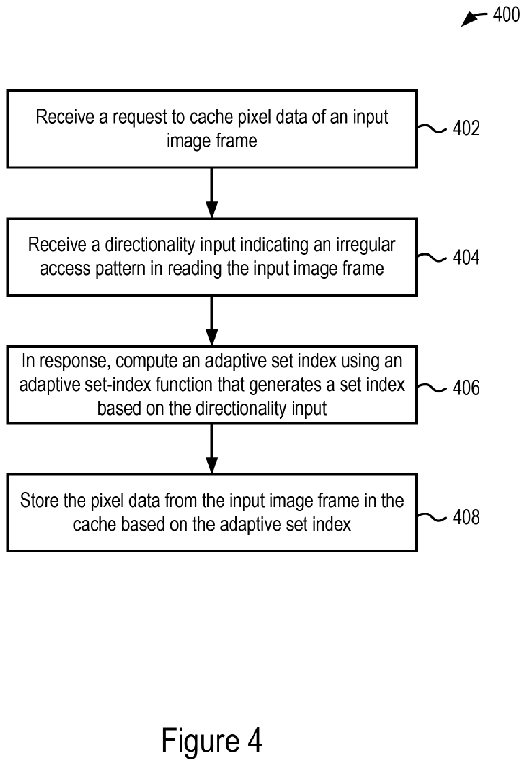

FIG. 4 is a flow diagram of an example process 400. The process 400 can be executed by a cache controller such as, for example, the cache controller 110 of the processing system 100 shown in FIG. 1. In particular, the process 400 can be executed by the adaptive set index logic 112. The process 400 can include receiving a request to cache pixel data of an input image frame (402). The request to cache pixel data can be received in response to a request for pixel data from the image processing unit 102. For example, the image processing unit 102 can send a memory access request for a portion of the input image frame. When the pixel data is provided from the main memory 108, a request to store the pixel data in cache 106 can be received by the cache controller 110. In some examples, the request to store the pixel data can be in the form of storing an image frame data block from main memory 108 to the cache 106 and can include a location of the image frame data block. For example, referring to FIG. 2, the location of the image frame data block can be the x- and y-coordinates of the image frame data block within the image frame.

The process 400 can include receiving a directionality input indicating an irregular access pattern in reading the input image frame (404). The adaptive set index logic 112 also can receive a directionality input from the processing system 100 or from software. In some examples, the directionality input can be an input signal or data where one value of the directionality input indicates that the image processing of the image frame has an irregular access pattern while another value of the directionality input indicates that the image processing of the image frame does not have an irregular access pattern. In some examples, the directionality input can be in the form of a value stored in a register in memory, which the cache controller 110 or the adaptive set index logic 112 can access. As mentioned above, irregular access pattern can be associated with image processing tasks such as, for example, image warping, motion compensation, image rotation, lens correction, etc. In some examples, an image processing software running on the image processing unit 102 or elsewhere in the processing system 100 can carry out the determination of presence of absence of irregular access patterns and provide the indication to the cache controller 110. That is, software external to the cache controller 110 can determine the presence or absence of irregular access patterns.

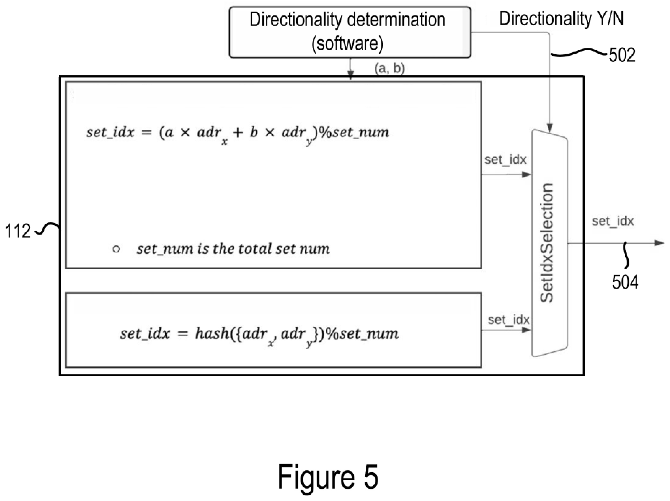

Responsive to receiving a directionality input that indicates an irregular access pattern, the process 400 includes computing an adaptive set index using an adaptive set-index function that generates a set index based on the directionality input (406). FIG. 5 shows an example bock diagram of the adaptive set index computation at the adaptive set index logic 112. The software can carry out directionality determination and provide directionality input to the adaptive set index logic 112. In particular, the software can provide as directionality input a directionality indicator 502, which can provide an indication of a presence or an absence of directionality. The presence of directionality can indicate that the irregular access pattern of the input image frame has directionality with respect to a dimension (x-axis or y-axis, for example) of the input image frame. If no directionality is present, the adaptive set index logic 112 can determine the set index based on a first set index function: *set_idx = hash*(*adrₓ , adr_{y,}*)% *set_num,* where *adrₓ* and *adr_{y}* correspond to the address of the image frame data block in terms of the x- and y-coordinates of the input image frame, *set_num* corresponds to a number indicating a total number of sets in the cache, and the *hash()* can be a hash function. If directionality is present, the adaptive set index logic 112 can determine the set index based on a second set index function: *set_idx =* (*a* × *adrₓ + b* × *adr_{y}*)%*set_num,* where "a" and "b" correspond to a first-dimension multiplier and a second dimension multiplier, respectively, and can be provided to the adaptive set index logic 112 by the software as part of the directionality input. In this instance, the adaptive set index logic 112 can determine the adaptive set index based on a sum of a product of a position of the image frame data block in a first dimension (*adrₓ*) and the first dimension multiplier (*a*) and a product of the position of the image frame data block in a second dimension (*adr_{y}*) and the second dimension multiplier *(b),* and modulo dividing the sum with a number (*set_num*) indicating a total number of sets in the cache. Based on the directionality input, the adaptive set index logic 112 can compute an adaptive set index 504.

The process 400 also includes storing the pixel data from the input image frame in the cache based on the adaptive set index (408). The adaptive set index computed by the adaptive set index logic 112 can indicate which set among the plurality of sets of the cache to store the image frame data block. For example, referring again to FIG. 1, the adaptive set index can indicate which ones of the m sets to store the image frame data block.

The process 400 can continue to determine the adaptive set index for additional image frame data blocks requested by the image processing unit 102. In some examples, the adaptive set index logic 112 may receive new or updated directionality input for another image frame. That is, the directionality input, such as the absence or presence of directionality indicator 502 and the first and second dimension multipliers (*a* and *b)* may remain constant throughout the processing of a single image frame, but may change when the image processing unit 102 begins processing another image frame from main memory 108. In some examples, the adaptive set index logic 112 can receive a directionality input indicating irregular access pattern and additional indication of the presence of directionality for a first image frame processed by the image processing unit 102. All image frame data blocks from the first image frame will then be stored in the cache based on the adaptive set index determined using the second adaptive set index function based on the first dimension multiplier and the second dimension multiplier. In a second subsequent image frame processed by the image processing unit 102, the adaptive set index logic 112 can receive a directionality input indicating irregular access pattern and additional indication of the absence of directionality for the second image frame. All image frame data blocks from the second image frame will then be stored in the cache based on the adaptive set index determined using the first adaptive set index function based on the hash of the coordinates of the position of the image frame data blocks in the second image frame.

By adapting the set index to the irregular access patterns of the input image frame, the adaptive set index logic 112 reduces the risk of underutilization of the sets of the cache 106. In particular, the adaptive set index logic 112 can result in a more even distribution of image frame data blocks over the plurality of sets of the cache 106 relative to approaches that fix the set index to the total number of sets in the cache 106. In instances where the access pattern does not have a directionality, the hashing function can randomly select the set index and thereby attempting an even distribution of the image frame data blocks across the sets despite the lack of directionality. The even distribution of image frame data blocks helps reducing the risk of uneven utilization of cache sets within the cache 106. As a result, more image frame data blocks can be stored in a given size of the cache 106, resulting in higher probability of cache hits and reduced memory access latency.

The adaptive set index logic 112 can be implemented in hardware such that the adaptive set index computed based on the directionality input is computed in hardware. In some instances, the adaptive set index logic 112 can include an application specific integrated circuit (ASIC), a field programmable gate array (FPGA), or a programmable microcontroller that implement the functions of the adaptive set index logic 112. In some instances, the hardware can also include specific purpose hardware modules for implementation of hash functions. In some examples, the software that determines the directionality, can provide the directionality indicator 502 and the first and second dimension multipliers in registers that can be accessed by the cache controller 110 and or the image processing unit 102.

### Cache Replacement Policies

Cache replacement policies are employed to identify the data to be removed from the cache when new data needs to be stored in the cache. As cache memory has limited space, not all data that is accessed by the image processing unit 102 can be stored in the cache 106. Therefore, when new data needs to be stored in cache 106, the cache controller 110 can identify the data to evict from the cache 106. The cache controller 110 can utilize various cache replacement policies to determine which data to evict. For example, least recently used (LRU) replacement policy evicts data that has not been accessed for the longest time; first-in-first-out (FIFO) replacement policy evicts the oldest data in the cache; and least frequently used (LFU) replacement policy evicts data that has been accessed the least number of times.

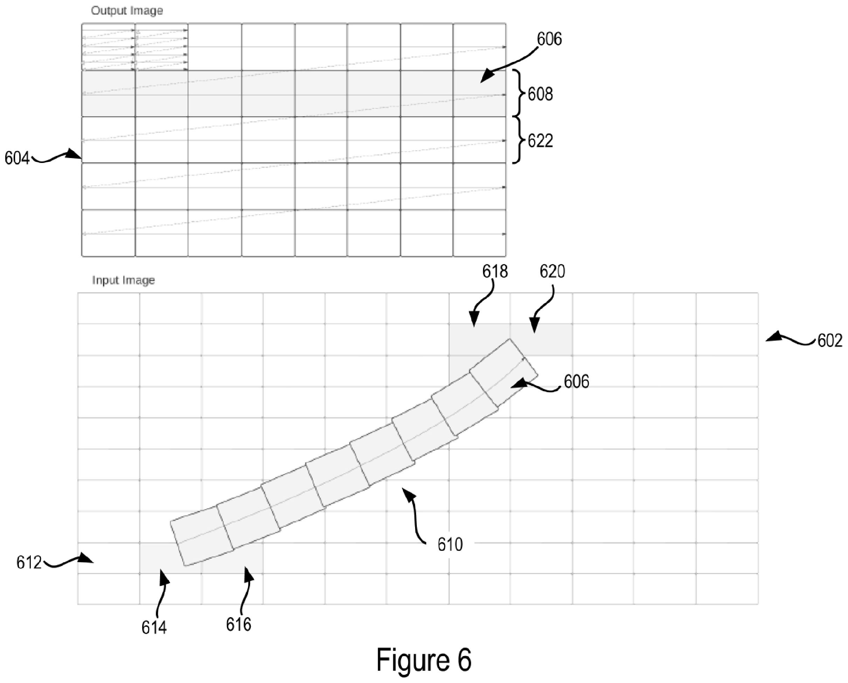

FIG. 6 shows an example least recently used cache replacement policy on an image processing application. In particular, FIG. 6 shows an input image frame 602 and an output image frame 604 that is generated by processing the input image frame 602. The output image frame 604 is composed of a plurality of tiles 606. The image processing unit 102 generates at least one of the plurality of tiles 606 by processing a portion of the input image frame 602. A tile can be referred to as a portion of the output image frame 604 and can include a set of pixels. The tile can be generated based on processing a portion of the input image frame 602. The portion of the input image frame 602 that results in the tile can be determined based on the position or mapping of the tile over the input image frame 602. For example, the image processing unit 102 can generate a first row of tiles 608 in the output image frame 604 based on the pixels covered by the tile scan pattern 610 over the input image frame 602. Specifically, the image processing unit 102 can generate the eight tiles of the first row of tiles 608 based on processing the eight tile positions in the tile scan pattern 610 over the input image frame 602.

In processing the image data in the first input image frame 602, the image processing unit 102 can request from memory image frame data blocks that include the pixels positioned below the tile scan pattern 610. For example, the image processing unit 102 can request from main memory 108, all the image frame data blocks 612 that are positioned below the tile scan pattern 610. As the image frame data blocks 612 are retrieved from main memory 108, the cache controller 110 can store a subset, if not all, of the retrieved image frame data blocks 612 in the cache 106. In some examples, the manner in which the cache controller 110 stores the image frame data blocks 612 in the cache 106 can be independent from the techniques discussed above in relation to FIGs. 1-5. That is, the cache controller 110 may not employ an adaptive set index based on directionality of the irregular access pattern of the input image frame to determine the storage policy of image frame data blocks 612 in the cache 106. In such cases, the cache controller 110 may, for example, employ a static set index that is equal to the total number of sets of the set-associative cache 106. In some other instances, the cache controller 110 may indeed employ the techniques discussed in relation to FIGs. 1-5 to store the image frame data blocks 612 in the cache 106.

Assuming the tile scan pattern 610 begins at the bottom left and ends at the top right, the cache controller 110 can store at least the first image frame data block 614 and the second image frame data block 616 in the cache 106. As the image processing unit 102 continues to request image frame data blocks along the tile scan pattern 610, the cache controller 110 can also continue to store the image frame data blocks that include pixels positioned below the tile scan pattern 610. When the image processing unit 102 reaches the end of the tile scan pattern 610, the cache controller 110 can store the third image frame data block 618 and the fourth image frame data block 620 in cache.

When the image processing unit 102 begins processing additional portions of the input image frame 602 based on an additional tile scan pattern (for example to generate a second row of tiles 622), the cache controller 110, given the limited space available in the cache 106, may have to evict one or more of the image frame data blocks associated with the input image frame 602. For example, if the cache controller 110 eviction policy were based on LRU, then the first image frame data block 614 and the second image frame data block 616 would have a higher priority to be evicted than the third image frame data block 618 and the fourth image frame data block 620. Thus, when the image processing unit 102 begins processing another can pattern below the tile scan pattern 610, and that scan patten includes pixels in the first image frame data block 614 and the second image frame data block 616, then these image frame data blocks may not be present in the cache 106, resulting in a high latency operation of requesting the blocks from main memory 108. One approach to reducing the risk of such high latency operations is to increase the size of the cache 106. But increasing the size of the cache 106 can also increase power consumption and cost.

As discussed herein, an example approach according to the techniques described in this specification defines a plurality of flags for each cache line in the cache 106. The plurality of cache flags can be used to take into consideration characteristics of image processing such as localization, continuity, and monotonicity to ensure that the image data blocks stored in the cache that have a high probability of reuse have the lowest chance of being evicted. The plurality of cache flags can be associated with at least two levels, where lower levels correspond to smaller portions of the output image frame and higher levels correspond to larger portions of the output image frame.

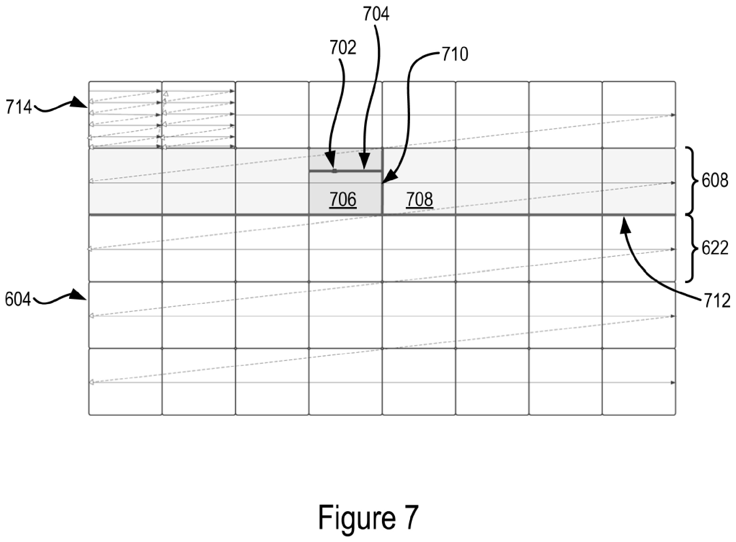

FIG. 7 depicts various levels associated with a plurality of flags in the cache. The output image frame 604 includes a plurality of tiles arranged in a plurality of rows. Each tile includes a set of pixels. As mentioned above, the tiles in the output image frame 604 are mapped from portions of the input image frame 602. A level-0 neighboring pixel can be defined as intra-tile scan line neighboring pixel. That is any pixel in the same scan line as that of the current pixel. For example, FIG. 7 shows a pixel 702. Any pixel on the scan line 704 can be a level-0 neighbor of the pixel 702. A level-1 neighboring pixel can be defined as an intra-tile-row neighboring pixel. For example, FIG. 7 shows a first tile 706 and a neighboring second tile 708. The first tile 706 and the second tile 708 are separated by an intra-tile boundary 710. Any pixel on the intra-tile boundary 710 can be a level-1 neighboring pixel to the pixel 702. A level-2 neighboring pixel can be defined as an inter-tile-row neighbor. For example, FIG. 7 shows a first row of tiles 608 and a second row of tiles 622 separated from the first row of tiles 608 by a tile row boundary 712. Any pixel on the tile row boundary 712 can be a level-2 neighboring pixel to the pixel 702.

In some examples, the image processing unit 102 can process the pixels in each tile in a raster scan pattern. That is, the image processing unit 102 can use a raster scan line pattern for processing all the pixels in the input image frame 602 to generate the corresponding tile in the output image frame 604. In the example shown in FIG. 7, the image processing unit 102 can utilize a horizontal scan line pattern 714 that begins at the top left of the tile and ends at the bottom right of the tile. Each scan line in the scan line pattern includes a row of pixels of the tile. When the image processing unit 102 processes a last pixel at the end of a scan line, it can be considered as an end of a level-0 processing. Further, when the image processing unit 102 processes the last pixel in the tile at the end of the raster scan pattern, it can be considered as an end of a level-1 processing. Lastly, when the image processing unit 102 processes the last pixel (end of level-1 processing) in the tile that is at the end of a row of tiles (e.g., row of tiles 608), it can be considered as an end of a level-2 processing.

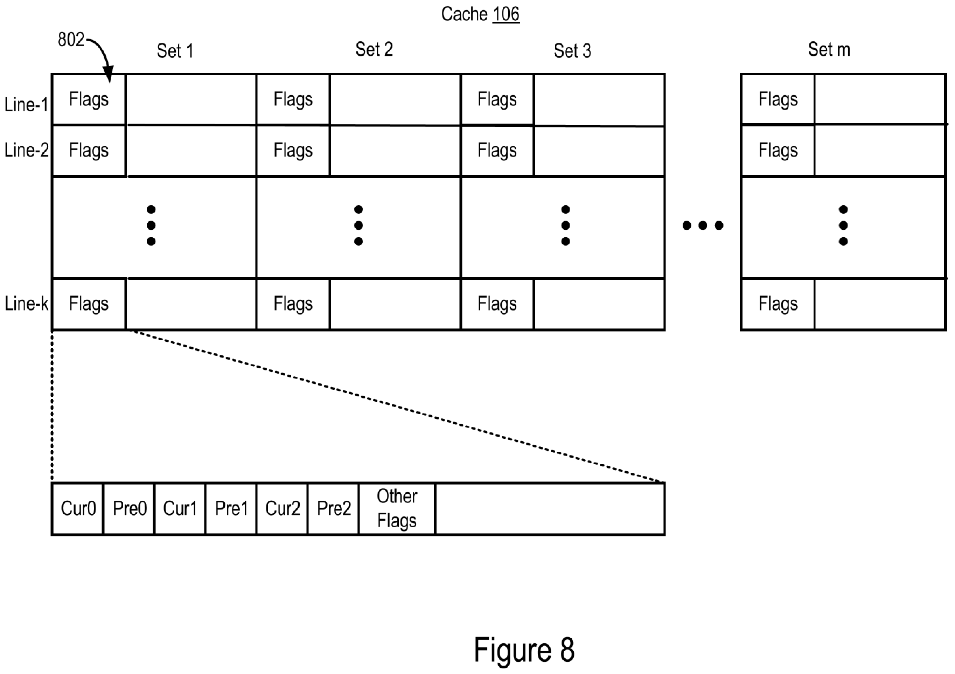

FIG. 8 shows the cache 106 including a plurality of flags. In particular, the cache 106 includes *m* sets, and each of the *m* sets includes *k* lines, and a plurality of flags 802 are associated with each line of each set. The plurality of flags include a current neighbor flag ("Cur") and a previous neighbor flag ("Pre") for each of the at least two levels discussed above. For example, the plurality of flags can include a Cur0 flag, a Curl flag, and a Cur2 flags associated with current neighbors for level-0, level-1, and level-2, respectively. The plurality of flags also include a Pre0 flag, a Pre1 flag, and a Pre2 flag associated with previous neighbors for level-0, level-1, and level-2, respectively. In some examples, each flag of the plurality of flags 802 can be a one-bit flag and can be set or reset by the cache controller 110.

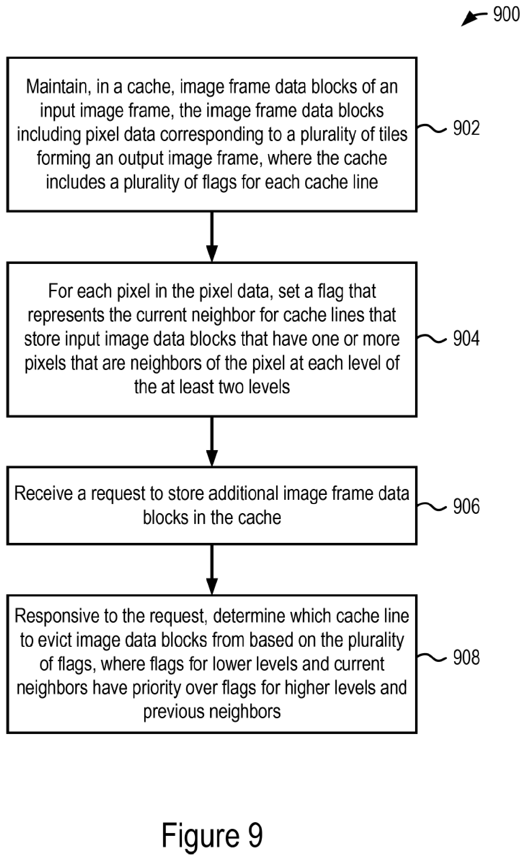

FIG. 9 is a flow diagram of an example cache replacement process 900. The cache replacement process 900 can be executed by the processing system 100 shown in FIG. 1. For example, the cache replacement process 900 can be executed by the cache controller 110. The example cache replacement process 900 includes maintaining, in a cache, image frame data blocks of an input image frame, the image frame data blocks including pixel data corresponding to a plurality of tiles forming an output image frame, where each cache line includes a plurality of flags (902). As discussed in relation to FIG. 6 above, the output image frame 604 is formed based on a plurality of tiles 606 that are positioned on the input image frame 602 along a tile scan pattern 610. The image frame data blocks 612 that include pixels positioned below the tiles 606 can be maintained in the cache 106. Further, as shown in FIG. 8, each cache line, where the image data blocks are stored, includes a plurality of flags. Each flag of the plurality of flags include a flag representing a current neighbor or a previous neighbor of a pixel in the pixel data on each of a plurality of levels (e.g., Cur0, Pre0, Cur1, Pre1, Cur2, and Pre2). As discussed in relation to FIG. 7, the plurality of flags are associated with various levels. Each level can correspond to a different respective size of portions of the output image frame and can represent a position of a pixel in the pixel data in relation to other pixels in the pixel data. Lower levels can correspond to smaller portions of the output image frame and higher levels correspond to larger portions of the output image frame. For example, level-0 represents the position of the pixel 702 in relation to other pixels in the same scan line 704. Level-1 represents the position of the pixel 702 in relation to other pixels on the intra-tile boundary 710. Level-2 represents the position of the pixel 702 in relation to other pixels on the tile row boundary 712 between the first row 608 and the second row 622. Thus, lower levels correspond to smaller portions of the output image and the higher levels correspond to larger portions of the output image frame.

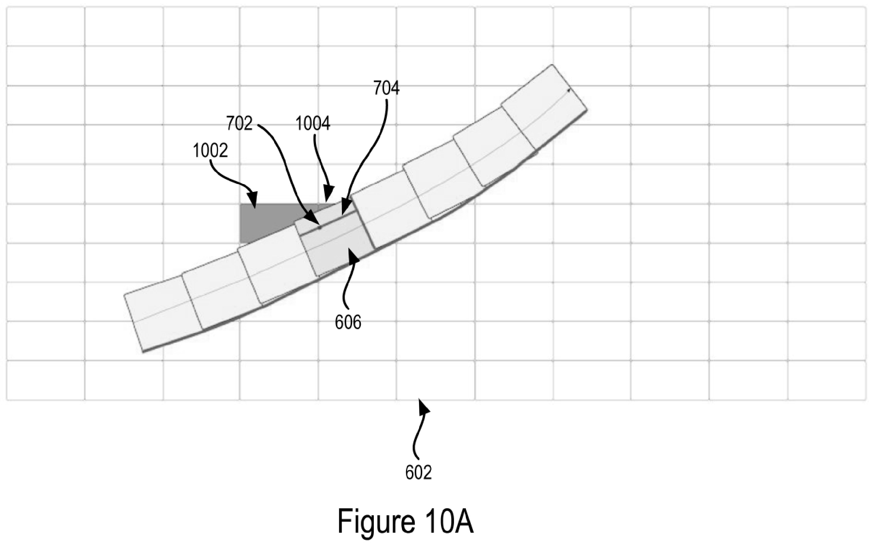

The example cache replacement process 900 further includes, for each pixel in the pixel data, setting a flag that represents the current neighbor for cache lines that store input image data blocks that have one or more pixels that are neighbors of the pixel at each level of the at least two levels (904). FIG. 10A shows the image frame data blocks associated with a pixel at level-0. In particular, FIG. 10A shows image frame data blocks of an input image frame 602 stored in main memory 108. When the image processing unit 102 processes the pixel 702 positioned on the scan line 704 of the tile 606, level-0 neighboring pixels of the pixel 702 will include all the pixels in on the scan line 704. When the image processing unit 102 is processing pixel 702, image frame data blocks that include the pixels in the scan line 704 will be stored in the cache 106. That is, a first image frame data block 1002 and as second image frame data block 1004 will be stored in the cache 106. Further, Cur0 flag associated with the cache lines where the first image frame data block 1002 and the second image frame data block 1004 are stored will be set.

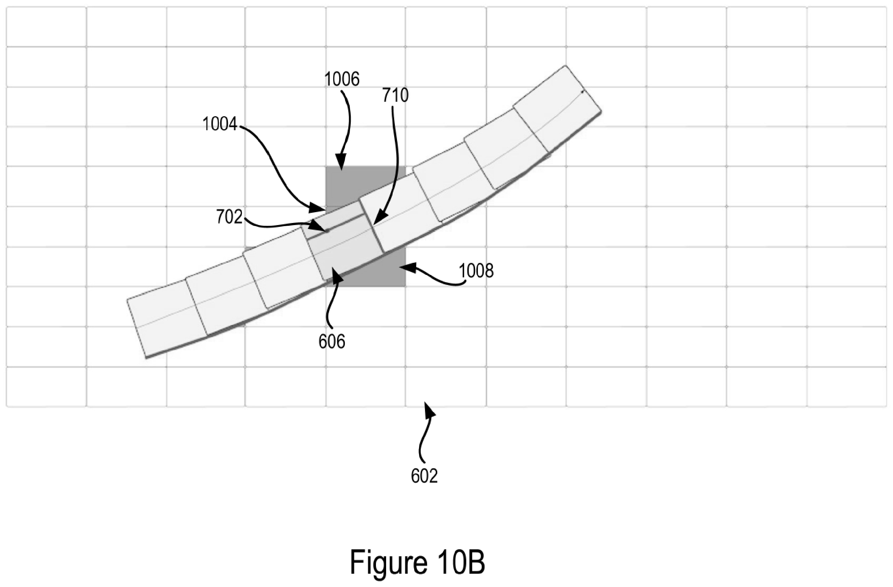

FIG. 10B shows the image frame data blocks associated with a pixel at level-1. When the image processing unit 102 is processing the pixel 702, the level-1 neighboring pixels can include all the pixels on the intra-tile boundary 710. Thus, the second image frame data block 1004, a third image frame data block 1006 and a fourth image frame data block 1008 will be stored in the cache 106. The cache controller 110 can set the Cur1 flags associated with the cache lines where the second image frame data block 1004, the third image frame data block 1006 and the fourth image frame data block 1008 are stored.

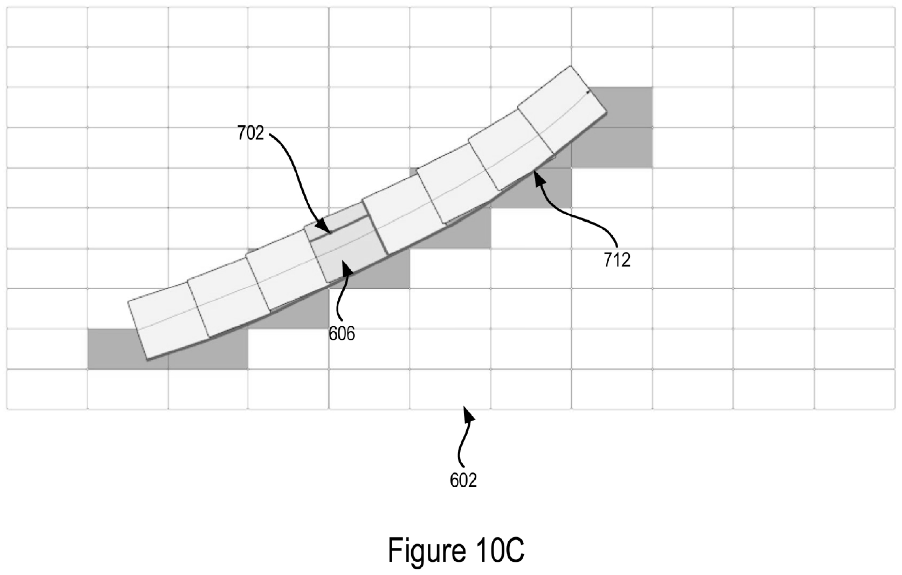

FIG. 10C shows the image frame data blocks associated with a pixel at level-2. The level-2 pixels can include all the pixels on the tile row boundary 712. The image frame data blocks that include these pixels are identified in FIG. 10C as shaded blocks. The cache controller 110 can set the Cur2 flags associated with the cache lines where the identified image frame data blocks are stored.

It should be noted that cache lines that include image frame data blocks having pixels at multiple levels in relation to the pixel 702 can have more than one of the current neighbor flags set. For example, referring to FIGs. 10A and 10B, the second image frame data block 1004 includes both level-0 and level-1 neighboring pixels in relation to the pixel 702. Therefore, both the Cur0 and Cur1 flags will be set for the cache line that stores the second image frame data block 1004.

The cache controller 110 also can change the flags when the processing reaches the end of a process level. For example, when the image processing unit 102 processes a pixel at the end of a level, the cache controller 110 can latch the flags associated with the current neighbor (e.g., Cur-x) for a level to the flag associate with the previous neighbor (e.g., Pre-x) of the same level. In addition, the cache controller 110 can clear the flag associated with the current neighbor for the level. Furthermore, the cache controller 110 can clear the flag associated with the current neighbor for any level lower than the level that has ended.

Referring again to FIG. 9, the example cache replacement process 900 further includes receiving a request to store additional image frame data blocks in the cache (906). The image processing unit 102, after processing the pixels included in the tile scan pattern 610 (e.g., FIG. 6), can start processing pixels in another tile pattern. For example, the next tile pattern can be positioned just below the tile scan pattern 610. The image processing unit 102 can request the next set of image frame data blocks from the main memory 108. As a result, the cache controller 110 can store the requested image frame data blocks into the cache 106. In some examples, the cache 106 may not be able to accommodate the additional image frame data blocks if the cache 106 is already full. In such instances, the cache controller 110 may have to evict one or more image frame data blocks from the cache 106 to make room for the additional image frame data blocks requested by the image processing unit 102.

The example cache replacement process 900 also includes responsive to the request, determine which cache line to evict image frame data blocks from based on the plurality of flags, where flags for lower levels and current neighbors have priority over flags for higher levels and previous neighbors (908). The eviction of the image frame data blocks from the cache lines is based on priority, where an image frame data block with a lower priority is evicted before an image frame data block with a higher priority. Thus, for two cache lines, one which has lower level flags set (e.g., Cur0) and the other that has higher level flags set (e.g., Curl), the image frame data block in the cache line with the higher level flag will be evicted. Also, if a cache line has a current flag set for a given level (e.g., Curl) and a second cache line has a previous flag set for the same level (e.g., Pre1), then the image frame data blocks in the cache line with the previous flag set for the same level will be evicted. In one example, the cache controller 110 can use the following order of priority where a lower level flag has a higher priority than a lower level flag, and within the same level, a current flag has a higher priority than a previous flag. Specifically, the cache controller 110 can use the following order of priority: Cur0 > Pre0 > Cur1 > Pre1 > Cur2 > Pre2 > no flag set. In instances where two cache lines have multiple flags set, the cache controller 110 can compare the highest priority flag in a cache line with the highest priority flags in other cache lines to determine which of those cache lines should be emptied by evicting the image frame data blocks stored therein.

In some examples, only two of the three levels discussed above may be employed in the replacement policy. For example, flags associated with only two of the level-0, level-1 and level-2 may be included for each of the cache lines. Using only two levels may reduce the complexity of the cache 106 and the cache controller 110 but can still provide improved performance.

In some examples, the cache controller 110 can determine whether a data request for an image frame data block is a hit in the cache 106. For example, the image processing unit 102 can request an image frame block including a pixel that the image processing unit 102 is processing. The cache controller 110 can determine whether the requested image frame block is present in the cache 106 and can indicate a hit if the image frame block is present in the cache 106. If there is a hit, the cache controller 110 can clear or reset the flags that represent the previous neighbor (Pre-x) associated with the same level as the level of the pixel being processed for the cache line where the image frame data block is stored. For example, referring to FIG. 7, if the image processing unit 102 is processing a pixel on the scan line 704, then the cache controller 110 can clear the previous neighbor flag for level-0 of the cache line that stores the image frame data block including that pixel. Similarly, if the pixel being processed is on the intra-tile boundary 710, the previous neighbor level-1 flags for the image frame data blocks that include the pixel.

In some instances, the flags-based replacement policy discussed herein can reduce the size of the cache needed, thereby reducing costs and increasing performance. Typically, image frame data blocks associated with processing a row of tiles may be stored in the cache 106 as some of these image frame data blocks may include pixel data for the processing of the subsequent row of tiles. In some such instances, the cache controller 110 may store all of the image frame data blocks associated with the current row of tiles. However, this can be disadvantageous, as image frame data blocks at the top boundary of the row of tiles may not be included in the processing of the next row of tiles that is positioned below the current row of tiles. The replacement policies discussed herein result in storing only those image frame data blocks that may be reused in the processing of the current or the next row of tiles. For example, referring to FIGs. 10A-10C, cache controller 110 can store in the cache 106 the image frame data blocks for each level of the plurality of levels. Specifically, the cache controller 110 can store 2 image frame data blocks for level-0 (FIG. 10A), store 3 image frame data blocks for level-1 (FIG. 10B), and store 11 image frame data blocks for level-2 (FIG. 10C). This results in storing 16 image frame data blocks in the cache. In contrast, the traditional cache replacement policies such as, e.g., LRU, would result in about 23 or more image frame data blocks stored in the cache. The reduction in the number of image frame data blocks resulting from the employment of the cache replacement polices discussed herein can advantageously result in the reduction in the requirement for the cache size. Reduction in the cache size can, in turn, result in the reduction in power consumption and cost.

### Scan Patterns

As shown in FIG. 7, the image processing unit 102 can utilize a horizontal scan line pattern 714 to process pixels within each tile. The horizontal scan line pattern 714 can begin at the top of the tile and can end at the bottom of the tile. A solid horizontal line represents the processing of the pixels in the input image frame that lie under the line. Dotted lines merely connect the end of one horizontal line to the beginning of the next horizontal line. No pixels are processed along the dotted lines. The number of horizontal lines within a tile can be based on the number of rows of pixels per tile in the output image frame.

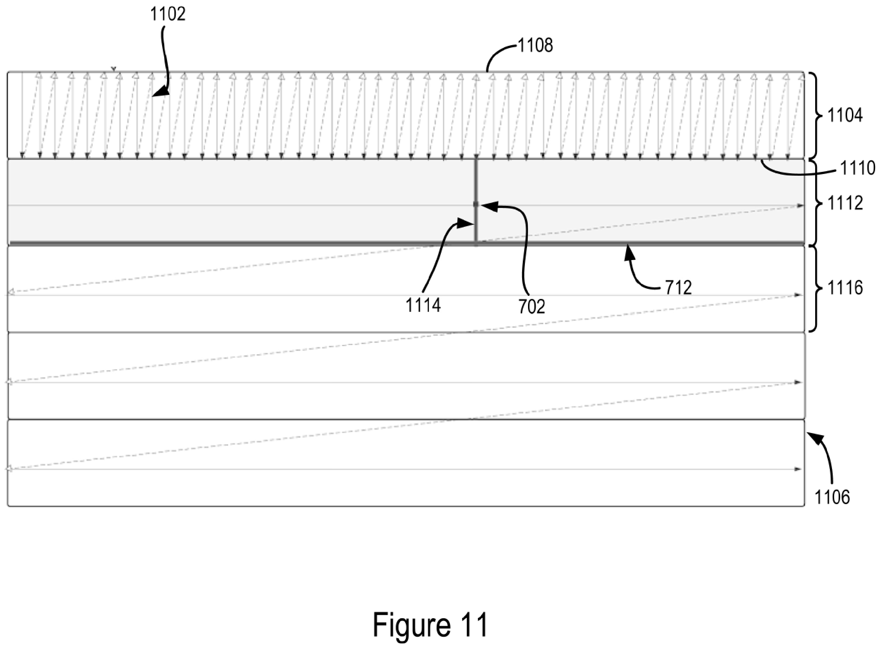

FIG. 11 shows a vertical scan line pattern per tile row. In particular, FIG. 11 shows vertical solid lines representing vertical scan lines 1102 that extend along the width of the first row 1104 of the output image frame 1106. Each vertical scan line 1102 begins at a first frame boundary 1108 and ends at a first inter-row boundary 1110. For a row that is not adjacent to the frame boundary, the vertical scan lines can extend between two inter-row boundaries of the row. The image processing unit 102 can process pixels in the image frame by vertically scanning lines of pixels within each tile-row, followed by vertically processing each tile-row in the image frame. For example, the image processing unit 102 can process pixels in the image frame data blocks in the input image that are positioned under the vertical scan lines 1102 to generate the output image frame 1106. The image processing unit 102 can processes the first row 1104 of the output image frame 1106 by vertically scanning along the vertical scan lines 1102 beginning at a first end of the first row 1104 and ending at the opposing second end of the first row 1104. After processing the pixel data for the first row 1104, the image processing unit 102 can process the next row below the first row 1104 in a similar manner.

As shown in FIG. 11, the output image frame 1106 does not include tiles. As a result, the plurality of flags may include flags that represent the current neighbor and the previous neighbor for only two levels: level-0 related to intra-tile scan-line neighbor pixels and level-2 related to intra-tile row neighbor pixels. Referring to FIG. 11, the pixel 702 is positioned on a vertical scan line 1114. The level-0 neighboring pixels to the pixel 702 can include the pixels on the vertical scan line 1114. The level-2 neighboring pixels to the pixel 702 can include the pixels on the tile row boundary 712 between a second row 1112 and a third row 1116. As there are not tiles, there are not level-1 intra-tile row neighbor pixels. In some such instances, the flags Cur1 and Pre1 associated with level-1 pixel neighbors may be held at a reset value. In some instances, the Cur1 and Pre1 flags may be removed from the plurality of flags associated with each cache line.

The replacement policies can be similar to that discussed above in relation to FIGs. 10A-10C. That is, the eviction of the image frame data blocks from the cache lines is based on priority, where an image frame data block with a lower priority is evicted before an image frame data block with a higher priority. Further, a lower level flag has a higher priority to a higher level flag and a flag that represents the previous neighbor has a lower priority to a flag that represents the current neighbor. The cache controller 110 can use the following order of priority: Cur0 > Pre0 > Cur2 > Pre2 > no flag set to determine which image frame data blocks to evict.

The vertical scan line can reduce the number of image frame data blocks that need to be cached in the cache 106. As discussed above in relation to FIGs. 10A-10C, the cache controller 110 can store in the cache 106 the image frame data blocks for each level of the plurality of levels. As only two levels are involved, with the example shown in FIGs. 10A-10C, the cache controller 110 can store 2 image frame data blocks associated with level-0 and 11 image frame data blocks for level-2 for a total of 13 image frame data blocks. This is a reduction of 3 image frame data blocks in relation to the number of image frame data blocks stored for the per-tile horizontal scan pattern shown in FIGs. 10A-10C.

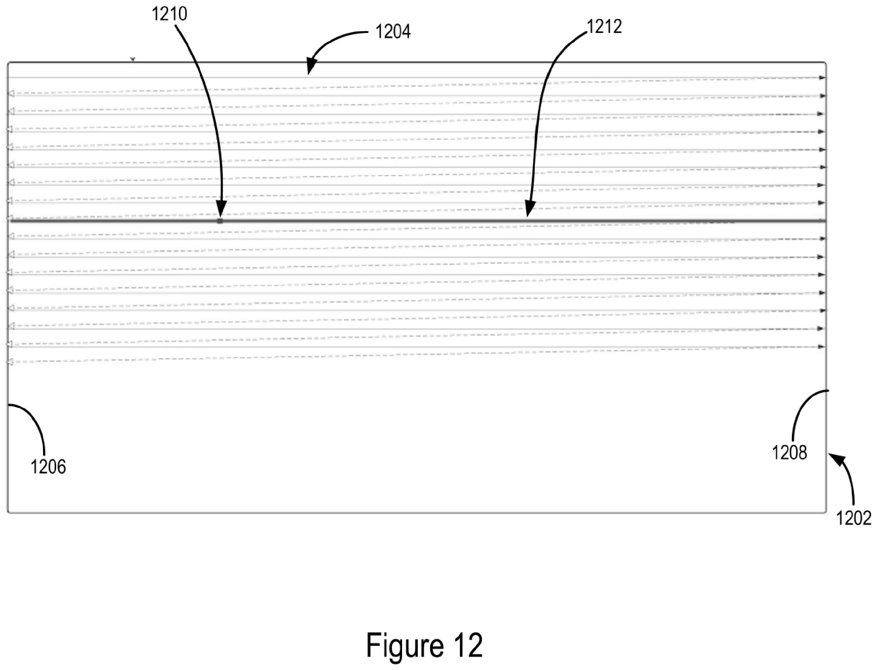

FIG. 12 shows a horizontal scan line pattern over an entire image frame. In particular, FIG. 12 shows an output image frame 1202 where the image processing unit 102 uses a scan line pattern that extends between to sides of the output image frame 1202. The scan line pattern includes scan lines 1204 that extend between a first side boundary 1206 of the output image frame 1202 and a second side boundary 1208, opposite the first side boundary 1206, of the output image frame 1202. The can pattern can start at the top left of the output image frame 1202 and can end at the bottom right of the output image frame 1202. For each horizontal scan line 1204, the image processing unit 102 can process pixels that are positioned under the scan line 1204 in the input image frame.

As there are not tiles or rows of tiles in the horizontal scan line pattern shown in FIG. 12, there are not level-0 and level-2 neighboring pixels to the pixel 1210 on the scan line 1212. Only level-2 neighboring pixels positioned on the scan line 1212 are included in the replacement policy. In such instances, the cache controller 110 can employ the following priority: Cur2 > Pre2. That is, only the flags related to the current and previous neighboring pixels on the scan line 1212 may be set for cache lines. The cache line that has a current neighbor flag (Cur2) set can take priority over a cache line that has a previous neighbor flag (Pre2).

The horizontal scan line pattern shown in FIG. 12 can reduce the number of image frame data blocks that need to be cached in the cache 106. As only level-2 is involved, with reference to the example shown in FIG. 10A-10C, only 11 image frame data blocks may have to be stored in the cache 106. This results in a reduction of 5 image frame data blocks compared to the tile-based horizontal scan line approach shown in FIG. 10A-10C and the in a reduction of 2 image frame data blocks compared to the vertical scan line approach discussed above in relation to FIG. 11.

### Large image frame data blocks

In some examples, the image frame data blocks that store pixel data may have a size that is greater than the size of a cache line in the cache 106. One approach to accommodating the large image frame data blocks can be to increase the cache line size. However, the increase in the cache line size can increase the size of the cache itself, which can impact the power consumption of the cache and the cost of the cache. In some examples, the image frame data block can be stored over a plurality of cache lines.

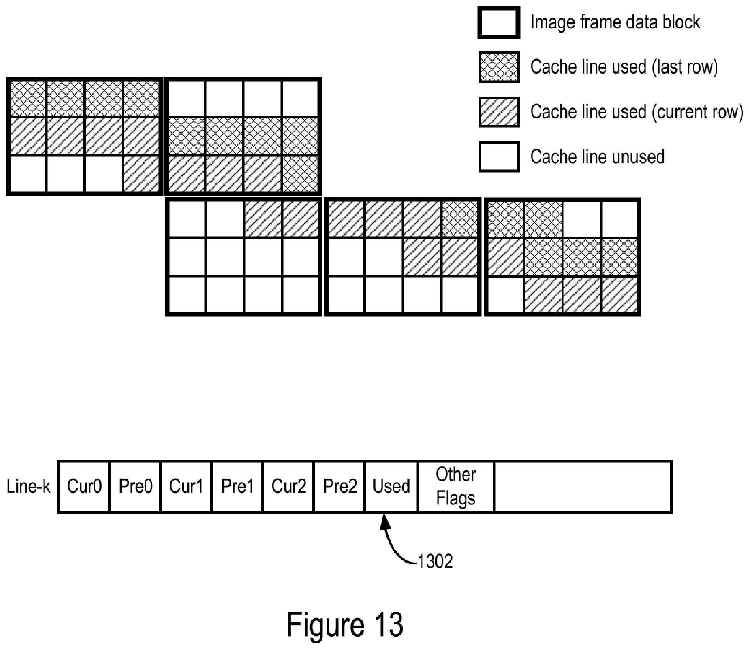

FIG. 13 shows a block diagram of image frame data blocks allocated to multiple cache lines. In particular, FIG. 13 shows five image frame data blocks and the cache lines to which the image frame data blocks are allocated. FIG. 13 also shows an addition of a "Used" flag 1302 to the plurality of flags for each cache line. The Used flag can be set or reset in a manner similar to that discussed above in relation to the Cur-x and Pre-x flags. When the image processing unit 102 requests for the image frame data block, which may occupy more than one cache line, the cache controller 110 can allocate a plurality of cache lines of the cache 106 to the image frame data blocks. The cache controller 110 can set the Used flag for the cache lines where the pixel data stored in the cache lines has been used for processing by the image processing unit 102. The cache controller 110 can also set the Used flag for cache lines where the request for the request for the image frame data blocks resulted in a hit. The cache controller 110 can also maintain the Used flag at a reset value for the cache lines for which the pixel data stored therein has not been used for processing by the image processing unit 102.

The cache controller 110, and, in particular, the replacement logic 114 can determine which cache line data to evict based on priority, which, in turn, is determined based on the plurality of flags associated with various levels as well as the Used flag. For example, the replacement logic 114 can evict the cache line that has the lowest priority based on the plurality of flags associated with various levels as discussed above in relation to FIG. 9, and also has a set used flag. Specifically, the replacement logic 114 can utilize the following order of priority: Cur0 > Pre0 > Cur1 > Pre1 > Cur2 > Pre2 > no flag set > Used. The Used flag is assigned the lowest priority in relation to the plurality of flags based on various levels of neighboring pixels.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program which may also be referred to or described as a program, software, a software application, an app, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows can also be performed by special purpose logic circuitry, e.g., an FPGA or an ASIC, or by a combination of special purpose logic circuitry and one or more programmed computers. Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

Further examples of the present disclosure are set out in the following numbered clauses.
Clause 1. A method, comprising:
   maintaining, in a cache, image frame data blocks of an input image frame, the image frame data blocks including pixel data corresponding to a plurality of tiles forming an output image frame, wherein the cache includes, for each cache line, a plurality of flags, wherein each flag represents a current neighbor or previous neighbor of a pixel in the pixel data on each of at least two levels, each level corresponding to a different respective size of portions of the output image frame and representing a position of a pixel in the pixel data in relation to other pixels in the pixel data, wherein lower levels correspond to smaller portions of the output image frame and higher levels correspond to larger portions of the output image frame;
   for each pixel in the pixel data, setting a flag that represents the current neighbor for cache lines that store input image data blocks that have one or more pixels that are neighbors of the pixel at each level of the at least two levels;
   receiving a request to store additional image frame data blocks in the cache; and
   responsive to the request, determining which cache line to evict image data blocks from based on the plurality of flags, wherein flags for lower levels and current neighbors have priority over flags for higher levels and previous neighbors.
Clause 2. The method of clause 1, further comprising: for each pixel at an end of processing of each level of the at least two levels:
   for cache lines that store image frame data blocks that have pixels that are neighbors of the pixel at that level, latching the flag that represents the current neighbor to the flag that represents the previous neighbor and clearing the flag that represents the current neighbor; for cache lines that store image frame data blocks that have pixels that are neighbors of the pixel at a lower level, clearing the flag that represents the current neighbor; and
   evicting data from that cache line that has a lowest priority, wherein a lower level flag has a higher priority to a higher level flag and the flag that represents the previous neighbor has a lower priority to the flag that represents the current neighbor.
Clause 3. The method of clause 1, wherein the at least two levels includes three levels: a level zero related to intra-tile scan-line neighbor pixels, a level one related to intra-tile-row neighbor pixels, and a level two related to inter-tile row neighbor pixels.
Clause 4. The method of clause 1, comprising:
   for each pixel:
   determining that the read data is a hit in the cache, and responsive to the determination, clearing the flags that represents the previous neighbor associated with a same level as that of the pixel for the cache line where the pixel data is stored.
Clause 5. The method of clause 1, wherein a sequence of processing pixels in the image frame includes horizontally scanning lines of pixels within each tile , followed by horizontally processing each tile in a tile-row.
Clause 6. The method of clause 1, wherein a sequence of processing pixels in the image frame includes vertically scanning lines of pixels within each tile-row , followed by vertically processing each tile-row in the image frame, and wherein the at least two levels includes two levels: a level-zero related to intra-tile scan-line neighbor pixels, and a level-two related to inter-tile row neighbor pixels.
Clause 7. The method of clause 1, wherein a sequence of processing pixels in the image frame includes horizontally scanning lines of pixels within each image frame from one end of the image frame to an opposite end of the image frame, wherein the at least two levels is reduced to a single level: a level-two related to inter-tile row neighbor pixels.
Clause 8. The method of clause 1, wherein the image frame data blocks occupy a plurality of cache lines of the cache, the method comprising:
   allocating a plurality of cache lines of the cache to the image frame data blocks;
   setting a used flag for cache lines of the plurality of cache lines for which image frame data blocks are used for processing or for which there is a hit for an image frame data block;
   maintaining the used flag at a reset value for cache lines of the plurality of cache lines for which the image frame data blocks have not been used for processing; and
   evicting data from the cache line that has the lowest priority and has a set used flag.
Clause 9. The method of clause 8, wherein the used flag for the cache line is assigned a lowest priority in relation to the plurality of flags associated with the cache line.
Clause 10. A processing system, comprising:
   a cache having stored therein image frame data blocks of an input image frame, the image frame data blocks including pixel data corresponding to a plurality of tiles forming an output image frame, wherein the cache includes, for each cache line, a plurality of flags, wherein each flag represents a current neighbor or previous neighbor of a pixel in the pixel data on each of at least two levels, each level corresponding to a different respective size of portions of the output image frame representing a position of the pixel in the pixel data in relation to the other pixels in the pixel data, wherein lower levels correspond to smaller portions of the output image frame and higher levels correspond to larger portions of the output image frame; and
   a cache replacement logic configured to:
      set, for each pixel, a flag that represents the current neighbor for cache lines that store input image frame data blocks that have one or more pixels that are neighbors of the pixel at each level of the at least two levels,
      receive a request to store additional image frame data blocks in the cache, and
      responsive to the request, determine which cache line to evict image frame data blocks from based on the plurality of flags, wherein flags for lower levels and current neighbors have priority over flags for higher levels and previous neighbors.
Clause 11. The processing system of clause 10, wherein the cache replacement logic is configured to:
   for each pixel at an end of processing of each level of the at least two levels:
   for cache lines that store image frame data blocks that have pixels that are neighbors of the pixels at that level, latch the flag that represents the current neighbor to the flag that represents the previous neighbor and clear the flag that represents the current neighbor,
   for cache lines that store image frame data blocks that have pixels that are neighbors of the pixels at a lower level, clear the flag that represents the current neighbor, and
   evict data from that cache line that has a lowest priority, wherein a lower level flag has a higher priority to a higher level flag and the flag that represents the previous neighbor has a lower priority to the flag that represents the current neighbor.
Clause 12. The processing system of clause 10, wherein the at least two levels includes three levels: a level zero related to intra-tile scan-line neighbor pixels, a level one related to intra-tile-row neighbor pixels, and a level two related to inter-tile row neighbor pixels.
Clause 13. The processing system of clause 10, wherein the cache replacement logic is configured to:
   for each pixel:
   determine that the read data is a hit in the cache, and responsive to the determination, clear the flags that represent the previous neighbor associated with a same level as that of the pixel for the cache line where the pixel data is stored.
Clause 14. The processing system of clause 10, wherein a sequence of processing pixels in the image frame includes horizontally scanning lines of pixels within each tile, followed by horizontally processing each tile in a tile-row.
Clause 15. The processing system of clause 10, wherein a sequence of processing pixels in the image frame includes vertically scanning lines of pixels within each tile-row, followed by vertically processing each tile-row in the image frame, and wherein the at least two levels includes two levels: a level-zero related to intra-tile scan-line neighbor pixels, and a level-two related to inter-tile row neighbor pixels.
Clause 16. The processing system of clause 10, wherein a sequence of processing pixels in the image frame includes horizontally scanning lines of pixels within each image frame from one end of the image frame to an opposite end of the image frame, wherein the at least two levels is reduced to a single level: a level-two related to inter-tile row neighbor pixels.
Clause 17. The processing system of clause 10, wherein the image frame data blocks occupy a plurality of cache lines of the cache, the cache replacement logic configured to:
   allocate a plurality of cache lines of the cache to the image frame data blocks,
   set a used flag for cache lines of the plurality of cache lines for which the image frame data blocks are used for processing or for which there is a hit for an image frame data block,
   maintain the used flag at a reset value for cache lines of the plurality of cache lines for which the image frame data blocks have not been used for processing, and
   evict data from the cache line that has the lowest priority and has a set used flag.
Clause 18. The processing system of clause 17, wherein the used flag for the cache line is assigned a lowest priority in relation to the plurality of flags associated with the cache line.

## Claims

1. A method comprising:
maintaining in a cache image frame data blocks of an input image frame that is used to generate an output image frame, wherein the cache includes, for each cache line, a plurality of flags associated with at least two levels, wherein each level of the at least two levels corresponds to a different sized portion of a plurality of portions of the output image frame;
processing a pixel of the input image frame for generation of the output image frame;
determining a set of image frame data blocks in the cache that include pixels that are located in at least one level of the at least two levels in relation to the pixel being processed;
setting one or more flags of the plurality of flags for each cache line that stores at least one image frame data block of the set of image frame data blocks;
receiving a request to store additional image frame data blocks in the cache, and based on the request, determining which cache line to evict image data from based on the plurality of flags, where flags corresponding to lower levels have priority over the flags for higher levels.

2. The method of claim 1, wherein each flag of the plurality of flags represents a current neighbor or a previous neighbor of the pixel of the image frame being processed on each level of the at least two levels, and wherein determining which cache line to evict image data from is based on the plurality of flags, wherein flats for lower levels and current neighbors have priority over flags of higher level and previous neighbors.

3. The method of claim 2, further comprising: for each pixel at an end of processing of each level of the at least two levels:
for cache lines that store image frame data blocks that have pixels that are neighbors of the pixel at that level, latching the flag that represents the current neighbor to the flag that represents the previous neighbor and clearing the flag that represents the current neighbor; for cache lines that store image frame data blocks that have pixels that are neighbors of the pixel at a lower level, clearing the flag that represents the current neighbor; and
evicting data from that cache line that has a lowest priority, wherein a lower level flag has a higher priority to a higher level flag and the flag that represents the previous neighbor has a lower priority to the flag that represents the current neighbor.

4. The method of claim 2, wherein the at least two levels includes three levels: a level zero related to intra-tile scan-line neighbor pixels, a level one related to intra-tile-row neighbor pixels, and a level two related to inter-tile row neighbor pixels.

5. The method of claim 2, comprising:
for each pixel:
determining that read data is a hit in the cache, and responsive to the determination, clearing the flags that represents the previous neighbor associated with a same level as that of the pixel for the cache line where data of the pixel is stored.

6. The method of claim 1, wherein a sequence of processing pixels in the input image frame includes horizontally scanning lines of pixels within each tile followed by horizontally processing each tile in a tile-row.

7. The method of claim 1, wherein a sequence of processing pixels in the image frame includes vertically scanning lines of pixels within each tile-row followed by vertically processing each tile-row in the image frame, and wherein the at least two levels includes two levels: a level-zero related to intra-tile scan-line neighbor pixels, and a level-two related to inter-tile row neighbor pixels.

8. The method of claim 1, wherein the image frame data blocks occupy a plurality of cache lines of the cache, the method comprising:
allocating a plurality of cache lines of the cache to the image frame data blocks;
setting a used flag for cache lines of the plurality of cache lines for which image frame data blocks are used for processing or for which there is a hit for an image frame data block;
maintaining the used flag at a reset value for cache lines of the plurality of cache lines for which the image frame data blocks have not been used for processing; and
evicting data from the cache line that has the lowest priority and has a set used flag; and optionally:
wherein the used flag for the cache line is assigned a lowest priority in relation to the plurality of flags associated with the cache line.

9. A processing system, comprising:
a cache having stored therein image frame data blocks of an input image frame that is used to generate an output image frame, wherein the cache includes, for each cache line, a plurality of flags associated with at least two levels, wherein each level of the at least two levels corresponds to a different sized portion of a plurality of portions of the output image frame; and
a cache replacement logic configured to:
determine a set of image frame data blocks in the cache that include pixels that are located in at least one level of the at least two levels in relation to a pixel of the input image frame being processed for generation of the output image frame,
set one or more flags of the plurality of flags for each cache line that stores at least one image frame data block of the set of image frame data blocks,
receive a request to store additional image frame data blocks in the cache, and
based on the request, determine which cache line to evict image data from based on the plurality of flags, where flags corresponding to lower levels have priority over the flags for higher levels.

10. The processing system of claim 9, wherein each flag of the plurality of flags represents a current neighbor or a previous neighbor of the pixel of the image frame being processed on each level of the at least two levels, wherein the cache replacement logic is configured to determine which cache line to evict image data from based on the plurality of flags, wherein flats for lower levels and current neighbors have priority over flags of higher level and previous neighbors.

11. The processing system of claim 10, wherein the cache replacement logic is configured to: for each pixel at an end of processing of each level of the at least two levels:
for cache lines that store image frame data blocks that have pixels that are neighbors of the pixels at that level, latch the flag that represents the current neighbor to the flag that represents the previous neighbor and clear the flag that represents the current neighbor,
for cache lines that store image frame data blocks that have pixels that are neighbors of the pixels at a lower level, clear the flag that represents the current neighbor, and
evict data from that cache line that has a lowest priority, wherein a lower level flag has a higher priority to a higher level flag and the flag that represents the previous neighbor has a lower priority to the flag that represents the current neighbor.

12. The processing system of claim 10, wherein the at least two levels includes three levels: a level zero related to intra-tile scan-line neighbor pixels, a level one related to intra-tile-row neighbor pixels, and a level two related to inter-tile row neighbor pixels.

13. The processing system of claim 10, wherein the cache replacement logic is configured to, for each pixel, determine that read data is a hit in the cache, and responsive to the determination, clear the flags that represents the previous neighbor associated with a same level as that of the pixel for the cache line where data of the pixel is stored.

14. The processing system of claim 9, a sequence in which pixels in the input image frame are processed includes:
(i) vertically scanning lines of pixels within each tile-row, followed by vertically processing each tile-row in the image frame, and wherein the at least two levels includes two levels: a level-zero related to intra-tile scan-line neighbor pixels, and a level-two related to inter-tile row neighbor pixels; or
(ii) horizontally scanning lines of pixels within each image frame from one end of the image frame to an opposite end of the image frame, wherein the at least two levels is reduced to a single level: a level-two related to inter-tile row neighbor pixels.

15. The processing system of claim 9, wherein the image frame data blocks occupy a plurality of cache lines of the cache, and wherein the cache replacement logic is configured to:
allocate a plurality of cache lines of the cache to the image frame data blocks,
set a used flag for cache lines of the plurality of cache lines for which image frame data blocks are used for processing or for which there is a hit for an image frame data block,
maintain the used flag at a reset value for cache lines of the plurality of cache lines for which the image frame data blocks have not been used for processing, and
evict data from the cache line that has the lowest priority and has a set used flag.
